# EUROPEAN PATENT SPECIFICATION

(11) **EP 2 446 240 B1**
(45) Date of publication and mention of the grant of the patent: **01.05.2013**
(21) Application number: 10732446.9
(22) Date of filing: 22.06.2010
(51) Int. Cl.: G01L 9/00, G01L 13/02

(54) **ELECTRONIC PRESSURE TRANSDUCER DEVICE**
ELEKTRONISCHER DRUCKWANDLER
DISPOSITIF ÉLECTRONIQUE TRANSDUCTEUR DE PRESSION

(30) Priority: 23.06.2009 IT TO20090479
(43) Date of publication of application: 02.05.2012
(73) Proprietor: ELBI International S.p.A., 10129 Torino (IT)
(72) Inventor: FARANO, Michele, I-10137 Torino (IT); MAGNONE, Luca, I-10025 PINO TORINESE (Torino) (IT); MAROZZO, Marco, I-10044 PIANEZZA (Torino) (IT); GRIECO, Nicola, I-10040 RIVALTA DI TORINO (Torino) (IT)
(74) Representative: Fassio, Valeria
(86) International application number: PCT/IB2010/052817
(87) International publication number: WO 2010/150186

(56) References cited:
- DE-A1- 2 162 658
- GB-A- 1 029 810
- US-A- 2 956 252
- US-A- 3 596 520
- US-A- 3 680 387
- US-A- 3 882 443
- US-B1- 6 742 395

## Description

The present invention has the subject of a pressure differential electronic transducer device, in particular for a fluid circuit.

Document GB 1029810 discloses an electronic transducer device of this type.

The object of the present invention is to make a compact electronic pressure transducer device that is able to detect both an absolute pressure and a difference between two pressures.

This and other objects are accomplished according to the invention with an electronic pressure transducer device as disclosed in claim 1.

Further characteristics and advantages of the invention will become clear from the following detailed description, given purely as a non-limiting example, with reference to the attached drawings, in which:
figure 1 is a perspective view of a transducer device according to the invention;
figure 2 is a section view of the device along the line II-II of figure 1; and
figure 3 is a section view of a variant of the device according to the invention.

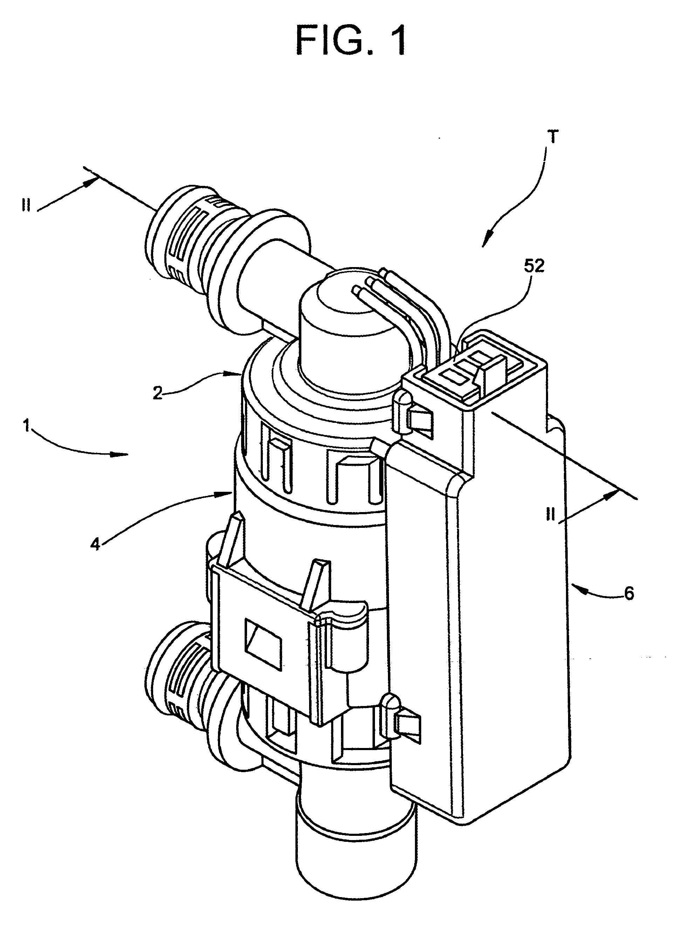

In figure 1 an electronic pressure transducer device is wholly indicated with T.

Such a device T has a hollow rigid casing 1 comprising an upper shell 2 coupled with a lower shell 4 and a lateral lid 6 connected to said upper 2 and lower 4 shells. The upper 2 and lower 4 shells and the lid 6 are advantageously made with a moulded plastic material.

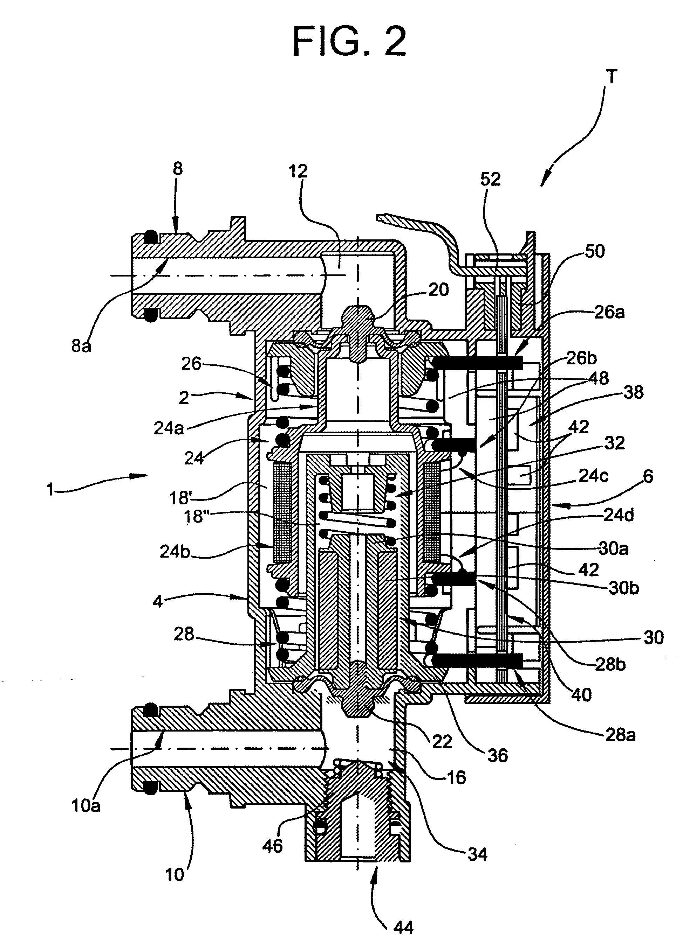

Figure 2 illustrates a section view, along the line II-II of figure 1, of the transducer device T.

The upper shell 2 has a tubular fitting 8 on top inside which an upper fluid intake passage 8a is defined.

The lower shell 4 also has a tubular fitting 10 inside which a lower fluid intake passage 10a is defined.

The passages 8a and 10a are connected to respective upper 12 and lower 16 fluid inlet chambers.

The upper shell 2 and the lower shell 4 define a first transduction chamber 18', separated in a fluid-tight manner from the inlet chambers 12 and 16 respectively through an upper membrane 20 and a lower membrane 22.

Inside the first transduction chamber 18' a coil 24 is inserted comprising an essentially tubular reel support 24a on which a coil 24b is made. The support 24a is resiliently suspended inside the first transduction chamber 18' through a first upper helicoidal spring 26 and an opposing first lower helicoidal spring 28. Said springs 26 and 28 comprise an electrically conductive material.

The support 24a cooperates with the upper membrane 20 and is movable with respect to the first transduction chamber 18' due to a first fluid pressure that enters into the device T through the upper fluid intake passage 8a.

Inside the first transduction chamber 18' there is also a reaction corp 36 that in the illustrated example is substantially shaped like an inverted cup, placed stationary in use in the lower shell 4. The reaction corp 36 defines a second transduction chamber 18", separated in a fluid-tight manner from the lower inlet chamber 16 from the lower membrane 22. The reaction corp 36 is maintained operatively integral to the lower shell 4 by the first lower spring 28 and extends inside the support 24a.

The first transduction chamber 18' and the second transduction chamber 18" are placed in communication with one another, for example through a hole present in the reaction corp 36, so as to equalise the pressures present inside the two chambers 18' and 18".

Inside the second transduction chamber 18" a ferromagnetic core is arranged, wholly indicated with 30. Said core 30 comprises a tubular support 30a that carries an element made of ferromagnetic material 30b.

The ferromagnetic core 30 is resiliently suspended in the second transduction chamber 18" through a second upper spring 32 and a second lower spring 34 arranged in the lower inlet chamber 16.

The core 30 is coupled with the lower membrane 22.

The second upper spring 32 is arranged between the end of the ferromagnetic core 30 opposite the lower membrane 22 and the reaction corp 36, and it is therefore opposite the second lower spring 34.

The ferromagnetic core 30 is arranged partially compenetrated inside the coil 24 and is movable with respect to the first transduction chamber 18', inside the support 24a of the coil 24, due to a second fluid pressure that enters into the device T through the lower fluid intake passage 10a.

The compenetration degree of the ferromagnetic core 30 in the coil 24 depends upon the values of such first and second fluid pressures, or their difference, and correspondingly the value of the inductance of the coil 24b depends upon it.

The device T also comprises an electronic elaboration circuit 38 that comprises a support plate 40 and a plurality of electronic components 42.

The circuit 38 is housed in a lateral recess 48 defined by the upper 2 and lower 4 shells and communicating with the first transduction chamber 18'. Said lateral recess 48 is closed by the lateral lid 6.

The support plate 40 is connected stationary in use to the upper 26 and lower 28 springs through respective first ends 26a and 28a of said springs 26 and 28.

The circuit 38 is connected to the coil 24b through respective second ends 26b and 28b of the upper 26 and lower springs 28, said second ends 26b and 28b being mobile in use and each connected to a respective end or terminal 24c and 24d of the coil 24b.

The circuit 38 is configured to detect the variation of the inductance of the coil 24 above described, said variation being indicative of the value of the first and second fluid pressure, or of the value of their difference. In a *per sé* known manner, the circuit 38 can comprise an LC-type oscillating circuit, in which the inductive component at least partially consists of the inductance of the coil 24b.

The lower shell 4 finally has a lower opening 44 communicating with the lower inlet chamber 16 and equipped with a removable closure cap 46.

Preferably, the lower spring 34 is interposed between the lower membrane 22 and the removable cap 46.

The upper shell 2 and the lateral lid 6 finally define a seat 50 in which an electric connector 52 is inserted, connected to the electronic circuit 38.

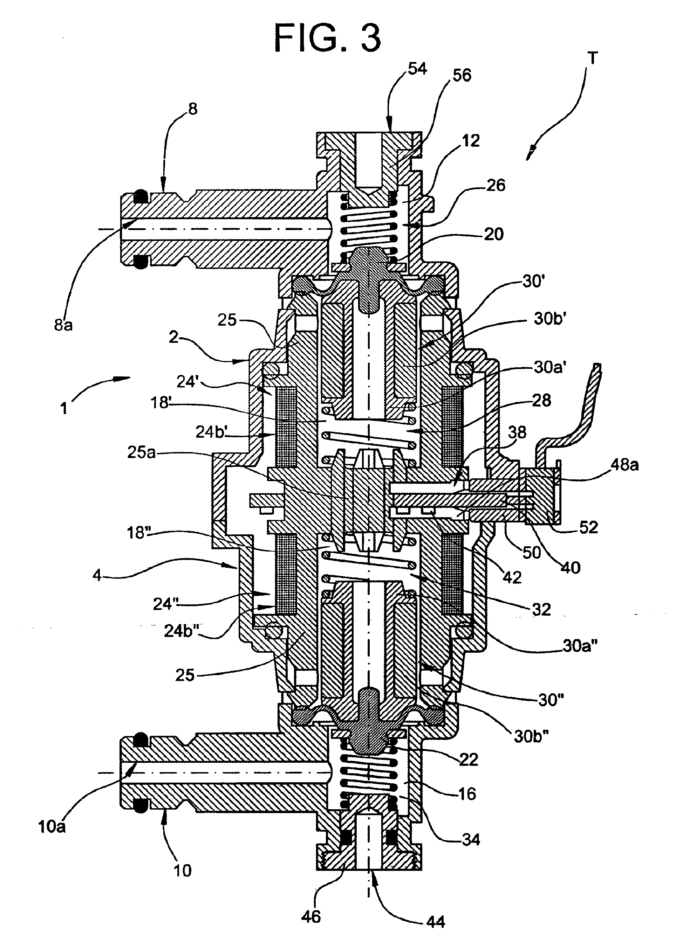

Figure 3 illustrates a section view of a variant of the transducer device T. Elements that are identical or similar to those of the device of figure 2 are indicated with the same reference numerals.

The upper shell 2 has a tubular fitting 8 on top inside which an upper fluid intake passage 8a is defined.

The lower shell 4 also has a tubular fitting 10 inside which a lower fluid intake passage 10a is defined.

The passages 8a and 10a are connected to respective upper 12 and lower 16 fluid inlet chambers.

The casing 1 defined by the upper shell 2 and by the lower shell 4 houses, stationary in use with respect to said shells 2 and 4, an essentially tubular reel support 25 in which are defined a first 18' and a second transduction chamber 18", which are separated in a fluid-tight manner from the associated inlet chambers 12 and 16 respectively through an upper membrane 20 and a lower membrane 22.

Inside the casing 1 a first and a second coil 24' and 24" are inserted comprising two coils 24b' and 24b" made on the support 25.

Inside each transduction chamber 18' and 18" a ferromagnetic core is also arranged, wholly indicated with 30' and 30", respectively. Said cores 30' and 30" comprise respective tubular supports 30a' and 30a" that carry respective elements made of ferromagnetic material 30b' and 30b".

The first ferromagnetic core 30' is resiliently suspended in the first transduction chamber 18' through a first upper helicoidal spring 26, arranged in the upper inlet chamber 12, and an opposing first lower helicoidal spring 28 interposed between the end of the first core 30' opposite the upper membrane 20 and a central portion 25a of the support 25.

The second ferromagnetic core 30" is resiliently suspended in the second transduction chamber 18' through a second upper helicoidal spring 32, interposed between the end of the second core 30" opposite the lower membrane 22 and the central portion 25a of the support 25, and an opposing second lower helicoidal spring 34 arranged in the lower inlet chamber 16.

The first core 30' is coupled with the upper membrane 20; the second core 30" is coupled with the lower membrane 22.

The first ferromagnetic core 30' is arranged in a partially compenetrated manner inside the first coil 24' and is movable with respect to the first transduction chamber 18', inside the support 25, due to a first fluid pressure that enters into the device T through the upper fluid intake passage 8a.

The second ferromagnetic core 30" is arranged in a partially compenetrated manner inside the second coil 24" and is movable with respect to the second transduction chamber 18", inside the support 25, due to a second fluid pressure that enters into the device T through the lower fluid intake passage 10a.

The compenetration degree of each ferromagnetic core 30', 30" in the respective coil 24', 24" depends upon the values of such first and second fluid pressures, or their difference, and correspondingly the value of the inductance of the respective coil 24b', 24b" depends upon it.

The device T further comprises an electronic elaboration circuit 38 that comprises a support plate 40 and a plurality of electronic components 42.

The circuit 38 is housed in a central recess 48a defined by the support 25.

The circuit 38 is connected to the coils 24' and 24" and is arranged to detect the variation of the inductance of the coils 24' and 24" above described, said variation being indicative of the value of the first and second fluid pressure, or of the value of their difference. In a *per sé* known manner, the circuit 38 can comprise an LC-type oscillating circuit, in which the inductive component at least partially consists of the inductance of the coils 24b' and 24b".

The casing 1 finally has an upper opening 54 communicating with the upper inlet chamber 12 and a lower opening 44 communicating with the lower inlet chamber 16, each opening being equipped with a respective removable closure cap 56 and 46.

Preferably, the upper spring 26 is interposed between the upper membrane 20 and the removable cap 56, the lower spring 34 is interposed between the lower membrane 22 and the removable cap 46.

The upper shell 2 and lower shell 4 finally defme a seat 50 in which an electric connector 52 is inserted, connected to the electronic circuit 38.

Clearly, without affecting the principle of the finding, the embodiments and the details can be widely varied with respect to what has been described and illustrated purely by way of a non-limiting example, without for this reason departing from the scope of the invention as defined in the attached claims.

## Claims

1. Electronic pressure transducer device comprising:
- a hollow rigid casing (1) showing a first (8, 8a) and a second (10, 10a) fluid intake opening and wherein a first (18') and a second (18") transduction chambers are defined, in which are mounted, respectively,
a first element (24, 24a, 24b; 30') resiliently suspended in the casing (1) and movable with respect to the casing (1) due to a first fluid pressure introduced through the first opening (8, 8a) and
a second element (30, 30") equally resiliently suspended in the casing (1) and movable with respect to the casing (1) due to a second fluid pressure introduced through the second opening (10, 10a);
said first (24, 24a, 24b; 30') and second element (30, 30") being arranged to generate an inductance and the configuration being such that said inductance is variable as a function of the values of said pressures or of their difference,
the pressure transducer being **characterized in that** the first element (24, 24a, 24b) comprises a coil (24, 24b) and the second element (30) comprises a ferromagnetic core (30) movable with respect to the casing (1) and movable, within the coil (24, 24b), with respect to the coil (24, 24b) itself;
the arrangement being such that said fluid pressures are able to cause a variation of the compenetration degree of the ferromagnetic core (30) into the coil (24, 24b), and the inductance of said coil (24, 24b) is variable as a function of the values of said pressures or of their difference.

2. Device according to claim 1, wherein the first element (30') comprises a ferromagnetic core (30') movable within a first coil (24', 24b') and the second element (30') comprises a ferromagnetic core (30") movable within a second coil (24", 24b");
the arrangement being such that said fluid pressures are able to cause a variation of the compenetration degree of each ferromagnetic core (30', 30") in the respective coil (24', 24b'; 24", 24b") and the inductance of each coil (24', 24b'; 24", 24b") is variable as a function of the values of said pressures or of their difference.

3. Device according to claim 1, wherein the first (18') and second (18") transduction chambers are separated in a fluid-tight manner from said first (8, 8a) and second (10, 10a) opening by means of a first (20) and, respectively, a second (22) membrane cooperating with the first element (24, 24b) and, respectively, with the second element (30), which are movably mounted respectively in the first (18') and second (18") transduction chamber.

4. Device according to claim 1, wherein the coil (24, 24b) is suspended in the casing (1) by means of two opposed helicoidal springs (26, 28) of electrically conductive material; the device further comprising an electronic elaboration circuit (38) connected to the coil (24, 24b) by means of said springs (26, 28), which show each a first end (26a, 28a) stationary in use, connected to the circuit (38), and a second end (26b, 28b) movable in use, connected to an end or terminal (24c, 24d) of said coil (24a, 24b).

5. Device according to claim 1, wherein the ferromagnetic core (30) is suspended in the casing (1) by means of two further opposed helicoidal springs (32, 34).

6. Device according to claim 1, 3 and 5, wherein the ferromagnetic core (30) is coupled to the second membrane (22) and a first helicoidal spring (34) is placed between the casing (1) and said second membrane (22), and a second helicoidal spring (32) is placed between the end of the core (30) opposed to the second membrane (22) and a reaction corp (36) placed stationary in use in the casing (1).

7. Device according to claim 6, wherein said reaction corp (36) extends between the ferromagnetic core (30) and the coil (24, 24b) and is maintained operatively integral to the casing (1) by one of the springs (28) associated to the coil (24, 2b).

8. Device according to any of the preceding claims, wherein the casing has an opening (44) communicating with said second opening (10, 10a) and provided with a removable closure cap (46).

9. Device according to claims 5 and 8, wherein one of said further helicoidal springs (34) is interposed between the second membrane (22) and said cap (46).

10. Device according to claims 3 and 4, wherein said casing (1) comprises an upper shell (2) coupled to a lower shell (4) so as to define said first transduction chamber (18'), and a lateral recess (48) communicating with the first transduction chamber (18') and wherein the electronic circuit (38) is housed; said lateral recess (48) being closed by a lateral lid (6) connected with said upper shell (2) and lower shell (4).

11. Device according to claim 10, wherein the upper shell (2) and the lateral lid (6) define a seat (50) wherein an electric connector (52) is inserted connected to said electronic circuit (38).

## Patentansprüche

1. Elektronischer Druckwandler mit:
einem hohlen starren Gehäuse (1), welches eine erste (8,8a) und eine zweite (10,10a) Fluideinlassöffnung aufweist und in welchem eine erste (18') und eine zweite (18'') Wandlungskammer abgegrenzt sind, in denen jeweils angeordnet sind:
ein erstes Element (24,24a,24b;30'), das federnd in dem Gehäuse (1) aufgehängt ist und von einem durch die erste Öffnung (8,8a) zugeführten ersten Fluiddruck bezüglich des Gehäuses (1) bewegbar ist, und
ein zweites Element (30, 30''), das ebenfalls federnd in dem Gehäuse (1) aufgehängt ist und von einem durch die zweite Öffnung (10,10a) zugeführten zweiten Fluiddruck bezüglich des Gehäuses (1) bewegbar ist;
wobei das erste (24,24a,24b;30') und zweite (30,30'') Element angeordnet sind, um eine Induktanz zu erzeugen, und die Konfiguration derart ist, dass sich die Induktanz als eine Funktion der Werte der Drücke oder ihrer Differenz ändert,
wobei der Druckwandler **dadurch gekennzeichnet ist, dass** das erste Element (24,24a,24b) eine Spule (24,24b) aufweist und das zweite Element (30) einen ferromagnetischen Kern (30) aufweist, der bezüglich des Gehäuses (1) bewegbar ist und innerhalb der Spule (24,24b) bezüglich der Spule (24,24b) bewegbar ist;
wobei die Anordnung derart ist, dass die Fluiddrücke eine Änderung des Eindringungsgrads des ferromagnetischen Kerns (30) in die Spule (24,24b) hervorrufen können und sich die Induktanz der Spule (24,24b) als eine Funktion der Werte der Drücke oder ihrer Differenz ändern kann.

2. Vorrichtung nach Anspruch 1, wobei das erste Element (30') einen innerhalb einer ersten Spule (24',24b') bewegbaren ferromagnetischen Kern (30') aufweist und das zweite Element (30') einen innerhalb einer zweiten Spule (24'',24b'') bewegbaren ferromagnetischen Kern (30'') aufweist;
wobei die Anordnung derart ist, dass die Fluiddrücke eine Änderung des Eindringungsgrads jedes ferromagnetischen Kerns (30',30'') in die jeweilige Spule (24',24b';24'',24b'') hervorrufen können und sich die Induktanz jeder Spule (24',24b';24'',24b'') als eine Funktion der Werte der Drücke oder ihrer Differenz ändern kann.

3. Vorrichtung nach Anspruch 1, wobei die erste (18') und zweite (18'') Wandlungskammer auf fluiddichte Weise getrennt sind von der ersten (8,8a) und zweiten (10,10a) Öffnung mittels einer ersten (20) bzw. einer zweiten (22) Membran, die mit dem ersten Element (24,24b) bzw. mit dem zweiten Element (30) zusammenwirken, die bewegbar in der ersten (18') bzw. zweiten (18'') Wandlungskammer angeordnet sind.

4. Vorrichtung nach Anspruch 1, wobei die Spule (24,24b) in dem Gehäuse (1) mit Hilfe von zwei gegenüberliegenden schraubenförmigen Federn (26,28) eines elektrisch leitenden Materials aufgehängt ist; wobei die Vorrichtung außerdem eine elektronische Verarbeitungsschaltung (38) aufweist, die mit der Spule (24,24b) über die Federn (26,28) verbunden ist, welche jeweils ein mit der Schaltung (38) verbundenes, während der Anwendung stationäres erstes Ende (26a,28a) und ein mit einem Ende oder Anschluss (24c,24d) der Spule (24a,24b) verbundenes, während der Anwendung bewegbares zweites Ende (26b,28b) aufweisen.

5. Vorrichtung nach Anspruch 1, wobei der ferromagnetische Kern (30) mit Hilfe von zwei zusätzlichen gegenüberliegenden schraubenförmigen Federn (32,34) in dem Gehäuse (1) aufgehängt ist.

6. Vorrichtung nach Anspruch 1, 3 und 5, wobei der ferromagnetische Kern (30) mit der zweiten Membran (22) gekoppelt ist und eine erste schraubenförmige Feder (34) zwischen dem Gehäuse (1) und der zweiten Membran (22) angeordnet ist und eine zweite schraubenförmige Feder (32) zwischen dem der zweiten Membran (22) gegenüberliegenden Ende des Kerns (30) und einem in dem Gehäuse (1) angeordneten, während der Anwendung stationären Reaktionskörper (36) angeordnet ist.

7. Vorrichtung nach Anspruch 6, wobei der Reaktionskörper (36) sich zwischen dem ferromagnetischen Kern (30) und der Spule (24,24b) erstreckt und durch eine der Federn (28), die der Spule (24,24b) zugeordnet ist, integral wirkend mit dem Gehäuse (1) gehalten wird.

8. Vorrichtung nach einem der vorstehenden Ansprüche, wobei das Gehäuse eine Öffnung (44) aufweist, die mit der zweiten Öffnung (10,10a) in Verbindung steht und mit einer abnehmbaren Verschlussklappe (46) versehen ist.

9. Vorrichtung nach Anspruch 5 und 8, wobei eine der zusätzlichen schraubenförmige Federn (34) zwischen der zweiten Membran (22) und der Kappe (46) angeordnet ist.

10. Vorrichtung nach Anspruch 3 und 4, wobei das Gehäuse (1) eine mit einer unteren Schale (4) verbundene obere Schale (2), um die erste Wandlungskammer (18') zu begrenzen, und eine seitliche Aussparung (48) aufweist, welche mit der ersten Wandlungskammer (18') in Verbindung steht und in welcher die elektronische Schaltung (38) untergebracht ist; wobei die seitliche Aussparung (48) von einem mit der oberen Schale (2) und unteren Schale (4) verbundenen seitlichen Deckel (6) geschlossen wird.

11. Vorrichtung nach Anspruch 10, wobei die obere Schale (2) und der seitliche Deckel (6) einen Sitz (50) begrenzen, in welchem eine mit der elektronischen Schaltung (38) verbundene elektrische Anschlusseinrichtung (52) eingesetzt ist.

## Revendications

1. Dispositif électronique transducteur de pression comprenant :
- un boîtier rigide creux (1) présentant une première (8, 8a) et une deuxième (10, 10a) ouverture d'admission de fluide et dans lequel une première (18') et une deuxième (18") chambre de transduction sont définies, dans lesquelles sont montés respectivement :
un premier élément (24, 24a, 24b ; 30') suspendu de façon résiliente dans le boîtier (1) et mobile par rapport au boîtier (1) en raison d'une première pression de fluide introduite par la première ouverture (8, 8a), et
un deuxième élément (30, 30") également suspendu de façon résiliente dans le boîtier (1) et mobile par rapport au boîtier (1) en raison d'une deuxième pression de fluide introduite par la deuxième ouverture (10, 10a) ;
lesdits premier (24, 24a, 24b ; 30') et deuxième élément (30, 30") étant agencés pour générer une inductance et la configuration étant telle que ladite inductance est variable en fonction des valeurs desdites pressions ou de leur différence,
le transducteur de pression étant **caractérisé en ce que** le premier élément (24, 24a, 24b) comprend une bobine (24, 24b) et le deuxième élément (30) comprend un noyau ferromagnétique (30) mobile par rapport au boîtier (1) et mobile, à l'intérieur de la bobine (24, 24b), par rapport à la bobine (24, 24b) elle-même ;
l'agencement étant prévu de telle façon que lesdites pressions de fluide sont aptes à provoquer une variation du degré de compénétration du noyau ferromagnétique (30) dans la bobine (24, 24b), et l'inductance de ladite bobine (24, 24b) est variable en fonction des valeurs desdites pressions ou de leur différence.

2. Dispositif selon la revendication 1, dans lequel le premier élément (30') comprend un noyau ferromagnétique (30') mobile à l'intérieur d'une première bobine (24', 24b') et le deuxième élément (30') comprend un noyau ferromagnétique (30") mobile à l'intérieur d'une deuxième bobine (24", 24b") ;
l'agencement étant prévu de telle façon que lesdites pressions de fluide sont aptes à provoquer une variation du degré de compénétration de chaque noyau ferromagnétique (30', 30") dans la bobine respective (24', 24b' ; 24", 24b"), et l'inductance de chaque bobine (24', 24b' ; 24", 24b") est variable en fonction des valeurs desdites pressions ou de leur différence.

3. Dispositif selon la revendication 1, dans lequel les première (18') et deuxième (18") chambres de transduction sont séparées, de manière étanche aux fluides, desdites première (8, 8a) et deuxième (10, 10a) ouvertures respectivement au moyen d'une première (20) et d'une deuxième (22) membrane coopérant respectivement avec le premier élément (24, 24b) et avec le deuxième élément (30), qui sont montées de façon mobile respectivement dans les première (18') et deuxième (18") chambres de transduction.

4. Dispositif selon la revendication 1, dans lequel la bobine (24, 24b) est suspendue dans le boîtier (1) au moyen de deux ressorts hélicoïdaux opposés (26, 28) faits d'un matériau électriquement conducteur ; le dispositif comprenant en outre un circuit d'élaboration électronique (38) connecté à la bobine (24, 24b) au moyen desdits ressorts (26, 28) qui présentent chacun une première extrémité (26a, 28a) fixe en utilisation, connectée au circuit (38), et une deuxième extrémité (26b, 28b) mobile en utilisation, connectée à une extrémité ou borne (24c, 24d) de ladite bobine (24a, 24b).

5. Dispositif selon la revendication 1, dans lequel le noyau ferromagnétique (30) est suspendu dans le boîtier (1) au moyen de deux autres ressorts hélicoïdaux opposés (32, 34).

6. Dispositif selon les revendications 1, 3 et 5, dans lequel le noyau ferromagnétique (30) est couplé à la deuxième membrane (22) et un premier ressort hélicoïdal (34) est placé entre le boîtier (1) et ladite deuxième membrane (22), et un deuxième ressort hélicoïdal (32) est placé entre l'extrémité du noyau (30) opposée à la deuxième membrane (22) et un corps de réaction (36) placé de façon fixe en utilisation dans le boîtier (1).

7. Dispositif selon la revendication 6, dans lequel ledit corps de réaction (36) s'étend entre le noyau ferromagnétique (30) et la bobine (24, 24b) et est maintenu fonctionnellement intégré au boîtier (1) par l'un des ressorts (28) associés à la bobine (24, 24b).

8. Dispositif selon l'une quelconque des revendications précédentes, dans lequel le boîtier a une ouverture (44) communiquant avec ladite deuxième ouverture (10, 10a) et pourvue d'un bouchon de fermeture amovible (46).

9. Dispositif selon les revendications 5 et 8, dans lequel l'un desdits ressorts hélicoïdaux supplémentaires (34) est intercalé entre la deuxième membrane (22) et ledit bouchon (46).

10. Dispositif selon les revendications 3 et 4, dans lequel ledit boîtier (1) comprend une coque supérieure (2) accouplée à une coque inférieure (4) afin de définir ladite première chambre de transduction (18'), et un évidement latéral (48) communiquant avec la première chambre de transduction (18') et dans lequel le circuit électronique (38) est logé ; ledit évidement latéral (48) étant fermé par un couvercle latéral (6) connecté à ladite coque supérieure (2) et à ladite coque inférieure (4).

11. Dispositif selon la revendication 10, dans lequel la coque supérieure (2) et le couvercle latéral (6) définissent un siège (50) dans lequel un connecteur électrique (52) est inséré et connecté audit circuit électronique (38).
